# EUROPEAN PATENT APPLICATION

(11) **EP 4 102 751 A1**
(43) Date of publication of application: **14.12.2022**
(21) Application number: 21750395.2
(22) Date of filing: 04.02.2021
(51) Int. Cl.: H04L 1/06

(54) **CSI TRANSMISSION METHOD, METHOD FOR TRIGGERING CSI TRANSMISSION, AND RELATED DEVICE**

(30) Priority: 07.02.2020 CN 202010082989
(71) Applicant: Vivo Mobile Communication Co., Ltd., Dongguan, Guangdong 523863 (CN)
(72) Inventor: BAO, Wei, Dongguan, Guangdong 523863 (CN)
(74) Representative: Raffay & Fleck
(86) International application number: PCT/CN2021/075229
(87) International publication number: WO 2021/155821

(57) **Abstract**

The present invention provides a channel state information (CSI) transmission method, a method for triggering CSI transmission, and a related device. The CSI transmission method comprises: controlling the CSI transmission according to a data type of CSI, wherein the data type comprises a type that is required to be fed back by a hybrid automatic repeat request (HARQ) and a type that is not required to be fed back by the HARQ.

## Description

### CROSS-REFERENCE TO RELATED APPLICATIONS

This application claims priority to Chinese Patent Application No. 202010082989.0, filed in China on February 7, 2020, which is incorporated herein by reference in its entirety.

### TECHNICAL FIELD

The present invention relates to the field of communications technologies, and in particular, to a CSI transmission method, a method for triggering CSI transmission, and a related device.

### BACKGROUND

Channel state information (Channel State Information, CSI) reeporing over sidelink (Sidelink) may be controlled by using media access control (Media Access Control, MAC) control elements (Control Element, CE). Currently, data at a MAC layer includes two types. One type of data requires a hybrid automatic repeat request (Hybrid Automatic Repeat Request, HARQ) feedback, and the other type of data does not require a HARQ feedback. Multiplexing of the two types of data is not allowed. To be specific, the two types of data are not allowed to be transmitted in one MAC protocol data unit (Protocol Data Unit, PDU). In addition, transmission resources are classified into resources with a HARQ feedback and resources without a HARQ feedback. However, in the prior art, there is no related solution to CSI transmission on sidelink.

### SUMMARY

Embodiments of the present invention provide a CSI transmission method, a method for triggering CSI transmission, and a related device, to specify a CSI transmission mode that can be used on a sidelink, so that performance of CSI transmission on sidelink can be improved.

To resolve the foregoing technical problem, the present invention is implemented as follows:

According to a first aspect, an embodiment of the present invention provides a CSI transmission method. The method is applied to a first device and includes:
controlling transmission of channel state information CSI based on a data type of the CSI, where
the data type includes a type that requires a hybrid automatic repeat request HARQ feedback or a type that requires no HARQ feedback.

According to a second aspect, an embodiment of the present invention further provides a CSI transmission method. The method is applied to a first device and includes:
receiving first trigger information from a second device; and
transmitting channel state information CSI in response to the first trigger information, where
the CSI carries first indication information, and the first indication information is used to indicate trigger information corresponding to the CSI.

According to a third aspect, an embodiment of the present invention further provides a method for triggering CSI transmission. The method is applied to a second device and includes:
transmitting first trigger information to a first device, where the first trigger information carries a trigger identifier or carries a type identifier used to indicate a reporting type of channel state information CSI, and the first trigger information is used to trigger reporting of the CSI; or
transmitting second trigger information to a first device, and in a case that CSI reported as triggered by the second trigger information is received or a time window corresponding to the second trigger information has become invalid, transmitting third trigger information to the second device, where the second trigger information and the third trigger information are used to trigger reporting of different CSI.

According to a fourth aspect, an embodiment of the present invention further provides a first device. The first device includes:
a transmission module, configured to control transmission of channel state information CSI based on a data type of the CSI, where
the data type includes a type that requires a hybrid automatic repeat request HARQ feedback or a type that requires no HARQ feedback.

According to a fifth aspect, an embodiment of the present invention further provides a first device. The first device includes:
a receiving module, configured to receive first trigger information from a second device; and
a transmission module, configured to transmit channel state information CSI in response to the first trigger information, where
the CSI carries first indication information, and the first indication information is used to indicate trigger information corresponding to the CSI.

According to a sixth aspect, an embodiment of the present invention further provides a second device. The second device includes:
a transmission module, configured to: transmit first trigger information to a first device, where the first trigger information carries a trigger identifier or carries a type identifier used to indicate a reporting type of channel state information CSI, and the first trigger information is used to trigger reporting of the CSI; or transmit second trigger information to a first device, and in a case that CSI reported as triggered by the second trigger information is received or a time window corresponding to the second trigger information has become invalid, transmit third trigger information to the second device, where the second trigger information and the third trigger information are used to trigger reporting of different CSI.

According to a seventh aspect, an embodiment of the present invention further provides a first device, including a processor, a memory, and a computer program stored in the memory and capable of running on the processor, where when the computer program is executed by the processor, the steps of the CSI transmission method according to the first aspect are implemented, or the steps of the CSI transmission method according to the second aspect are implemented.

According to an eighth aspect, an embodiment of the present invention further provides a second device, including a processor, a memory, and a computer program stored in the memory and capable of running on the processor, where when the computer program is executed by the processor, the steps of the method for triggering CSI transmission according to the third aspect are implemented.

According to a seventh aspect, an embodiment of the present invention further provides a computer-readable storage medium, where the computer-readable storage medium stores a computer program, and when the computer program is executed by a processor, the steps of the CSI transmission method according to the first aspect are implemented, or the steps of the CSI transmission method according to the second aspect are implemented, or the steps of the method for triggering CSI transmission according to the third aspect are implemented.

In the embodiments of the present invention, transmission of the CSI is controlled based on the data type of the CSI, where the data type includes the type that requires a HARQ feedback and the type that requires no HARQ feedback. Therefore, a CSI transmission mode that can be used for sidelink is provided, so that performance of CSI transmission on sidelink can be improved.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a structural diagram of a network system to which an embodiment of the present invention may be applied;
FIG. 2 is a flowchart of a CSI transmission method according to an embodiment of the present invention;
FIG. 3 is a flowchart of another CSI transmission method according to an embodiment of the present invention;
FIG. 4 is a flowchart of a method for triggering CSI transmission according to an embodiment of the present invention;
FIG. 5 is a structural diagram of a first device according to an embodiment of the present invention;
FIG. 6 is a structural diagram of another first device according to an embodiment of the present invention;
FIG. 7 is a structural diagram of a second device according to an embodiment of the present invention;
FIG. 8 is a structural diagram of another first device according to an embodiment of the present invention;
FIG. 9 is a structural diagram of another first device according to an embodiment of the present invention; and
FIG. 10 is a structural diagram of another second device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The terms "first", "second", and the like in this specification and claims of this application are used to distinguish between similar objects instead of describing a specific order or sequence. It should be understood that the numbers used in this way are interchangeable in appropriate circumstances so that the embodiments of this application described herein can be implemented in other orders than the order illustrated or described herein. In addition, the terms "include", "have", and any other variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, system, product, or device. In addition, the term "and/or" used in the specification and claims indicates at least one of connected objects. For example, "A and/or B and/or C" represents the following seven cases: Only A exists, only B exists, only C exists, both A and B exist, both B and C exist, both A and C exist, and all A, B, and C exist.

For ease of understanding, the following describes some content in the embodiments of the present invention.

Introduction of sidelink (Sidelink, also referred to as a sidelink, a side link, an SL, or the like):

Since Release 12, long term evolution (Long Term Evolution, LTE) systems have supported sidelink for direct data transmission between user equipments (User Equipment, UE) without a network device.

A design of LTE sidelink is applicable to specific public security affairs (for example, emergency communication on fire sites or disaster sites such as an earthquake), vehicle to everything (Vehicle to Everything, V2X) communication, or the like. Vehicle to everything communication includes various services, for example, basic security communication, advanced (self) driving, platooning, and sensor extension. Because LTE sidelink supports only broadcast communication, LTE sidelink is mainly used for basic security communication. Other advanced V2X services with strict quality of service (Quality of Service, QoS) requirements in terms of latency and reliability will be supported by new radio (New Radio, NR) sidelink.

A 5th Generation (5th-Generation, 5G) NR system may be used in a working frequency band above 6 GHz that is not supported by LTE, and supports a larger working bandwidth, but an NR system of a current release only supports an interface between base station and terminal, and does not support a sidelink interface for direction communication between terminals. The sidelink interface may also be referred to as a PC5 interface.

### Transmission modes of sidelink:

Current sidelink transmission mainly includes three transmission modes: broadcast (Broadcast), groupcast (Groupcast), and unicast (Unicast). Unicast is one-toone (that is, one to one) transmission. Groupcast is one-to-many (that is, one to many) transmission. Broadcast is also one-to-many (that is, one to many) transmission, but broadcast does not have a concept that UEs belong to a same group.

Currently, both sidelink unicast communication and sidelink groupcast communication support a physical layer hybrid automatic repeat request (Hybrid Automatic Repeat request, HARQ) feedback mechanism.

### Resource allocation modes:

There are a total of two resource allocation modes for sidelink UE.

Network-side device scheduling mode (that is, mode 1): A network-side device such as a base station schedules sidelink resources for sidelink transmission of the UE. In other words, resource allocation is controlled and performed by the network-side device for each UE.

UE autonomous mode (that is, mode 2): The UE determines (one or more) sidelink transmission resources among sidelink resources configured by a base station or a network or preconfigured sidelink resources, that is, without scheduling by the base station. In other words, each UE autonomously selects resources.

### Channel state information (Channel State Information, CSI) report:

On a Uu interface, a CSI report may include a channel quality indicator (Channel Quality Indicator, CQI), a precoding matrix indicator (Precoding Matrix Indicator, PMI), a channel state information reference signal resource indicator (CSI-RS Resource Indicator, CRI), a synchronization signal/PBCH block resource indicator (SS/PBCH Block Resource Indicator, SSBRI), a layer indicator (Layer Indicator, LI), a rank indicator (Rank Indicator, RI), and layer 1 reference signal received power (L1-Reference Signal Received Power, L1-RSRP).

CSI reporting may be periodic reporting, semi-persistent reporting, or aperiodic reporting.

Sidelink CSI reporting may be done by a media access control (Media Access Control, MAC) control element (Control Element, CE) carrying a 4-bit CQI and 1-bit RI content for reporting. CSI reporting may be triggered by a transmit end by using sidelink control information (Sidelink Control Information, SCI). After a receive end receives the trigger, the receive end completes one report in an indicated window.

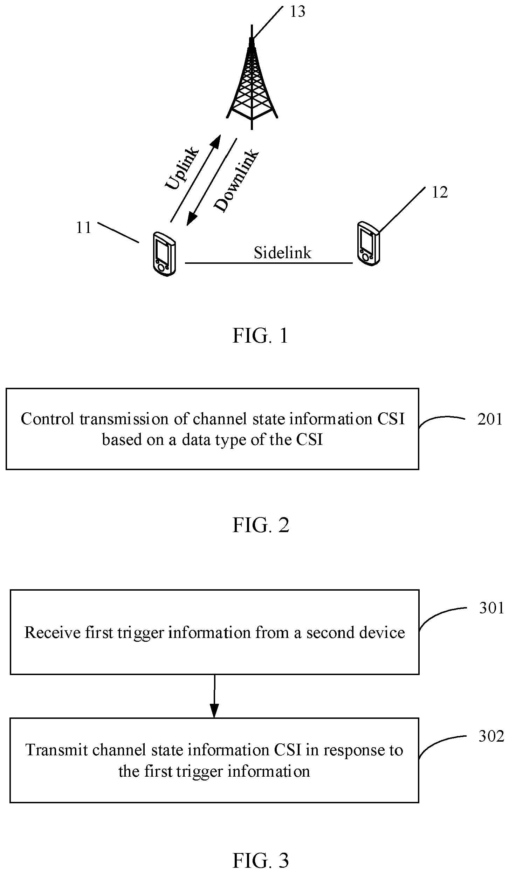

FIG. 1 is a structural diagram of a network system to which an embodiment of the present invention may be applied. As shown in FIG. 1, the network system includes a first device 11, a second device 12, and a network-side device 13. Both the first device 11 and the second device 12 may be user-side devices such as mobile phones, tablet personal computers (Tablet Personal Computer), laptop computers (Laptop Computer), personal digital assistants (personal digital assistant, PDA), mobile Internet devices (Mobile Internet Device, MID), or wearable devices (Wearable Device). It should be noted that specific types of the first device 11 and the second device 12 are not limited in this embodiment of the present invention. The network-side device 13 may be a base station, such as a macro base station, an LTE eNB, a 5G NR NB, or a gNB. Alternatively, the network-side device 13 may be a small cell, for example, a small cell such as a low power node (Low Power Node, LPN), a pico (pico) cell, or a femto (femto) cell. Alternatively, the network-side device 13 may be an access point (Access Point, AP). The base station may alternatively be a network node formed by a central unit (Central Unit, CU) and a plurality of TRPs managed and controlled by the central unit. It should be noted that a specific type of the network-side device 13 is not limited in this embodiment of the present invention.

It should be noted that a communications link between the first device 11 and the second device 12 is a sidelink (or sidelink), and data transmission can be performed between the first device 11 and the second device 12 directly by using sidelink. A CSI transmission method according to an embodiment of the present invention may be performed by the first device 11, and a method for triggering CSI transmission according to an embodiment of the present invention may be performed by the second device. For details, refer to the following description.

An embodiment of the present invention provides a CSI transmission method. The method is applied to a first device. FIG. 2 is a flowchart of a CSI transmission method according to an embodiment of the present invention. As shown in FIG. 2, the method includes the following step.

Step 201: Control transmission of channel state information CSI based on a data type of the CSI.

The data type includes a type that requires a hybrid automatic repeat request HARQ feedback or a type that requires no HARQ feedback.

The CSI may be CSI of sidelink, and the CSI of sidelink may be carried in a MAC CE for transmission. For ease of description, the CSI carried in the MAC CE for transmission is hereinafter referred to as a CSI reporting MAC CE, and the CSI transmission is described by using the CSI reporting MAC CE as an example.

The data type (which may also be referred to as a feedback type or a transmission type, or the like) may include the type that requires a HARQ feedback and the type that requires no HARQ feedback. Data of the type that requires a HARQ feedback usually has a relatively high requirement on a transmission block error rate, but does not have such a high requirement on latency. Data of the type that requires no HARQ feedback usually has a lower requirement on a transmission block error rate, but has a relatively high requirement on transmission latency. Currently, multiplexing between the two types of data is not allowed, that is, the two types of data need to be transmitted separately. It should be noted that data types of any data in this embodiment refer to the two types: the type that requires a HARQ feedback and the type that requires no HARQ feedback.

The data type of the CSI may be predefined by a protocol; or may be configured, for example, configured by a network-side device; or may be determined based on other sidelink data currently to be transmitted; or may be determined based on a current transmission resource; or may be determined based on a transmission requirement of the CSI itself. This is not limited in this embodiment.

For the foregoing step 201, for example, in a case that the data type of the CSI is the type that requires a HARQ feedback, multiplex transmission of the CSI and other sidelink data (for example, signaling radio bearer (Signaling RB, SRB) data) that requires a HARQ feedback may be controlled, or transmission of the CSI on a transmission resource that carries a HARQ feedback is controlled. In a case that the data type of the CSI is the type that requires no HARQ feedback, multiplex transmission of the CSI and other sidelink data (for example, data radio bearer (Data RB, DRB) data) that requires no HARQ feedback may be controlled, or transmission of the CSI on a transmission resource that does not carry a HARQ feedback is controlled.

It should be noted that, after receiving trigger information used for triggering CSI reporting and transmitted by a second device, the first device may control transmission of the CSI based on the data type of the CSI.

In the CSI transmission method provided in this embodiment of the present invention, transmission of the CSI is controlled based on the data type of the CSI, where the data type includes the type that requires a HARQ feedback and the type that requires no HARQ feedback. Therefore, a CSI transmission mode that can be used for sidelink is provided, so that performance of CSI transmission on sidelink can be improved.

Optionally, the data type of the CSI is configured or predefined by a protocol.

In an implementation, the data type of the CSI of sidelink may be configured by the network-side device. This mode is relatively flexible, and a type of a CSI reporting MAC CE may be determined based on a feature of each UE. For example, if most of data types between UEs are types that do not require a HARQ feedback, the CSI reporting MAC CE may alternatively be configured as a type that requires no HARQ feedback; or if all data types between UEs are types that require a HARQ feedback, the CSI reporting MAC CE may be configured as a type that requires a HARQ feedback.

In another implementation, the data type of the CSI may be predefined by a protocol, and the implementation is relatively simple. For example, the data type of the CSI of sidelink may be predefined by a protocol as a type that requires no HARQ feedback, or the data type of the CSI of sidelink may be predefined by a protocol as a type that requires a HARQ feedback.

In an actual application, the data type of the CSI may be configured or predefined based on the transmission requirement of the CSI. For example, from a perspective of the latency, the CSI needs to be transmitted to a trigger end of CSI reporting as soon as possible to affect subsequent transmission, and therefore, the CSI reporting MAC CE may be predefined or configured as a type that requires no HARQ feedback; or from a perspective of reliability, it is expected that the CSI can be successfully transmitted as far as possible, and therefore, the CSI reporting MAC CE may be predefined or configured as a type that requires a HARQ feedback.

Optionally, in this embodiment, in a case that whether the CSI reporting MAC CE requires a HARQ feedback is predefined by a protocol or configured, the CSI reporting MAC CE may be transmitted in a same transmission mode as sidelink data such as an SRB and a DRB. In other words, the transmission is performed according to a principle of multiplexing data of a same type and not multiplexing data of different types, a priority principle, and a priority bit rate (Priority Bit Rate, PBR) principle. This transmission mode is relatively clear, and unified processing with other data is allowed.

Optionally, the data type of the CSI may be determined based on at least one of the following:
a resource type of a first transmission resource, where the first transmission resource is a resource used to transmit sidelink data to be transmitted, and the resource type is used to indicate a data type whose transmission is supported by the first transmission resource;
a data type of first data, where the first data includes part or all of data other than the CSI in the sidelink data to be transmitted; and
a transmission requirement of the CSI.

In an implementation, the data type of the CSI may be determined based on the resource type of the first transmission resource. For example, in a case that the first transmission resource supports or allows transmission of data requiring a HARQ feedback, the data type of the CSI may be determined as the type that requires a HARQ feedback; or in a case that the first transmission resource supports or allows transmission of data requiring no HARQ feedback, the data type of the CSI may be determined as the type that requires no HARQ feedback, and further, the CSI may be transmitted on the first transmission resource, to ensure that the CSI is transmitted as soon as possible.

It should be noted that transmission resources used for transmitting sidelink data may also be classified into two types: a resource with a HARQ feedback and a resource without a HARQ feedback. For the resource with a HARQ feedback, on a basis of indicating a transmission resource, a position of a feedback resource, for example, a corresponding position relationship between the feedback resource and the transmission resource, may also be indicated. For example, if a start position of the transmission resource is t in time domain and f in frequency domain, the position of the feedback resource in time domain may be t+k, where k is a positive integer, and the position in frequency domain is f. Generally, positions of the transmission resource and the feedback resource may use a default relationship or a configured relationship.

In an actual application, generally, on the transmission resource with a feedback resource position, data transmission that requires a HARQ feedback may be performed, and data transmission that requires no HARQ feedback may also be performed. In other words, no feedback is transmitted in the feedback resource position, and feedback resource waste is caused. On the transmission resource without a feedback resource position, generally, only data transmission that requires no HARQ feedback can be performed, and data transmission that requires a HARQ feedback cannot be performed, because for resource allocation, no feedback resource position is indicated and a feedback position cannot be temporarily determined and allocated during scheduling. This temporary allocation mode generally cannot be implemented, because a corresponding feedback resource position may have been allocated for another purpose.

In another implementation, the data type of the CSI may be determined based on part or all of the data other than the CSI in the sidelink data to be transmitted. For example, if all other sidelink data currently to be transmitted (that is, the data other than the CSI in the sidelink data to be transmitted) is of a same data type, it may be determined that the data type of the CSI is the data type of the other sidelink data currently to be transmitted, to improve data transmission efficiency and reduce resource waste; or if there is data whose priority is higher than that of the CSI in the sidelink data currently to be transmitted, it may be determined that the data type of the CSI is a data type of data whose priority is higher than that of the CSI, to ensure that the CSI is transmitted as soon as possible; or if there is data whose priority is lower than that of the CSI in the sidelink data currently to be transmitted, it may be determined that the data type of the CSI is a data type of data whose priority is the highest except the CSI in the sidelink data currently to be transmitted, to improve data transmission efficiency and reduce resource waste.

In another implementation, the data type of the CSI may be determined based on the transmission requirement of the CSI, where the transmission requirement may include a transmission latency, transmission reliability, or the like. For example, in a case that transmission reliability of the CSI needs to be ensured, the data type of the CSI may be determined as the type that requires a HARQ feedback; or in a case that a relatively low CSI transmission latency needs to be ensured, the data type of the CSI may be determined as the type that requires no HARQ feedback, so that the transmission of the CSI can satisfy a latency requirement of the CSI.

It should be noted that the transmission requirement of the CSI may be configured, for example, configured by the network-side device, or may be predefined by a protocol.

It should be noted that, in this embodiment, the data type of the CSI may alternatively be determined by taking all the foregoing plurality of parameters into account. For example, in a case that the first transmission resource supports transmission of both data requiring a HARQ feedback and data requiring no HARQ feedback, the data type of the CSI may be determined based on a transmission requirement of the first data or the CSI; or in a case that the data type of the CSI cannot be determined based on the first data, the data type of the CSI may be determined based on the transmission requirement of the CSI.

In this embodiment, the data type of the CSI is determined based on at least one of the resource type of the first transmission resource, the data type of the first data, and the transmission requirement of the CSI, so that the transmission of the CSI is more flexible, that is, the CSI can be multiplexed with the data requiring a HARQ feedback, or can be multiplexed with data requiring no HARQ feedback. Therefore, it is ensured that the CSI reporting MAC CE can be transmitted as soon as possible.

Optionally, the first data includes data having a higher priority than the CSI in the sidelink data to be transmitted.

In this embodiment, the data type of the CSI is determined based on the data having a higher priority than the CSI in the sidelink data to be transmitted. Therefore, it can be ensured that the CSI is transmitted as soon as possible, and the transmission latency is reduced.

For example, according to the priority principle, if transmission that requires a HARQ feedback is selected for the data having a higher priority than the CSI, that is, a data type of the data having a higher priority than the CSI is the type that requires a HARQ feedback, the CSI reporting MAC CE may use a transmission mode that requires a HARQ feedback for transmission as soon as possible, and is multiplexed on a transmission resource of the data whose priority is currently higher than that of the CSI for transmission together, that is, a data type of the CSI reporting MAC CE is also the type that requires a HARQ feedback.

Optionally, in a case that the data type of the CSI is determined based on the resource type of the first transmission resource, the data type of the CSI is the same as the data type whose transmission is supported by the first transmission resource.

In this embodiment, in a case that the first transmission resource supports or allows transmission of data requiring a HARQ feedback, the data type of the CSI may be determined as the type that requires a HARQ feedback; or in a case that the first transmission resource supports or allows transmission of data requiring no HARQ feedback, the data type of the CSI may be determined as the type that requires no HARQ feedback, and further, the CSI may be transmitted on the first transmission resource, to ensure that the CSI is transmitted as soon as possible and reduce the transmission latency of the CSI.

It should be noted that, in a case that the first transmission resource supports transmission of both data requiring a HARQ feedback and data requiring no HARQ feedback, the data type of the CSI may be determined as the data requiring a HARQ feedback, or the data type of the CSI may be determined as the data requiring no HARQ feedback, or the data type of the CSI may be further determined based on other parameters (for example, the foregoing transmission requirement of the CSI, and the foregoing first data). This is not limited in this embodiment.

Optionally, in a case that the data type of the CSI is determined based on the data type of the first data, the data type of the CSI is the same as the data type of the first data.

In this embodiment, in a case that the data type of the first data is the type that requires a HARQ feedback, it may be determined that the data type of the CSI is the type that requires a HARQ feedback; or in a case that the data type of the first data is the type that requires no HARQ feedback, it may be determined that the data type of the CSI is the type that requires no HARQ feedback, and further, multiplex transmission of the CSI and the first data may be performed to improve transmission efficiency.

Optionally, in a case that a second transmission resource supports transmission of data requiring a HARQ feedback and data requiring no HARQ feedback, the data type of the CSI is configured or predefined by a protocol; or
in a case that there is no data having a higher priority than the CSI in sidelink data to be transmitted, the data type of the CSI is configured or predefined by a protocol; or
in a case that a second transmission resource supports transmission of data requiring a HARQ feedback and data requiring no HARQ feedback, and that there is no data having a higher priority than the CSI in sidelink data to be transmitted, the data type of the CSI is configured or predefined by a protocol, where
the second transmission resource is a resource used to transmit the sidelink data to be transmitted.

In this embodiment, the data type of the CSI reporting MAC CE may be configured or predefined by a protocol in a case that at least one of the following is satisfied: the transmission resource does not limit the data type supported for transmission (that is, the second transmission resource supports transmission of the data requiring a HARQ feedback and the data requiring no HARQ feedback) and there is no data having a higher priority than the CSI in the sidelink data to be transmitted. Therefore, flexibility of determining the data type of the CSI can be improved.

For example, if the data type of the CSI reporting MAC CE is configured or predefined by a protocol as the type that requires a HARQ feedback in a case that the transmission resource does not limit the data type supported for transmission and there is no data having a higher priority than the CSI in the sidelink data to be transmitted, it is determined that the data type of the CSI reporting MAC CE is the type that requires a HARQ feedback; or if the data type of the CSI reporting MAC CE is configured or predefined by a protocol as the type that requires no HARQ feedback in a case that the transmission resource does not limit the data type supported for transmission and there is no data having a higher priority than the CSI in the sidelink data to be transmitted, it is determined that the data type of the CSI reporting MAC CE is the type that requires no HARQ feedback.

Optionally, in a case that a third transmission resource supports transmission of data requiring a HARQ feedback and data requiring no HARQ feedback, and that there is no data having a higher priority than the CSI in sidelink data to be transmitted, the data type of the CSI is determined based on at least one of the following:
a data type of second data, where the second data is data having a highest priority in data other than the CSI in the sidelink data to be transmitted; and
a transmission requirement of the CSI, where
the third transmission resource is a resource used to transmit the sidelink data to be transmitted.

In an implementation, in a case that the third transmission resource supports transmission of data requiring a HARQ feedback and data requiring no HARQ feedback, and that there is no data having a higher priority than the CSI in the sidelink data to be transmitted, data of the CSI may be determined based on a data type of data (that is, the second data) having a highest priority in the data other than the CSI in the sidelink data to be transmitted.

In an actual situation, the CSI reporting MAC CE generally has only a few bytes, and occupies a relatively small proportion in a MAC PDU. To minimize impact of CSI reporting on a current data transmission process, if a data type the same as that of the second data is selected for the CSI reporting MAC CE, it means that presence of the CSI reporting MAC CE does not change a data type of a MAC PDU to be transmitted next time, and only the CSI reporting MAC CE needs to be transmitted while the second data is transmitted. Therefore, transmission efficiency can be improved.

In another implementation, in a case that a third transmission resource supports transmission of data requiring a HARQ feedback and data requiring no HARQ feedback, and that there is no data having a higher priority than the CSI in sidelink data to be transmitted, the data type of the CSI may be determined based on a transmission requirement of the CSI.

Optionally, in this implementation, the data type of the CSI may alternatively be determined by taking into account both the transmission requirement of the CSI and the data other than the CSI in the sidelink data to be transmitted. For example, in a case that both data requiring a HARQ feedback and data requiring no HARQ feedback exist in the data other than the CSI in the sidelink data to be transmitted, whichever data type is selected for the CSI reporting MAC CE, transmission resource waste is not caused, and there is data of the same type for being multiplexed with the CSI reporting MAC CE. In this case, based on a transmission requirement of the CSI reporting MAC CE, reliability (that is, requiring a HARQ feedback) or a latency (that is, requiring no HARQ feedback) may be selected to set the data type of the CSI reporting MAC CE.

Optionally, the transmission requirement of the CSI is configured or predefined by a protocol.

In this embodiment, the transmission requirement of the CSI may be configured. For example, the transmission requirement of the CSI may be configured by the network-side device; or the transmission requirement of the CSI may be predefined by a protocol.

Optionally, the controlling transmission of channel state information CSI based on a data type of the CSI includes:
controlling multiplex transmission of the CSI and third data, where
the third data is data of the same data type as the CSI in sidelink data to be transmitted.

In this embodiment, the CSI reporting MAC CE can be multiplexed with data whose data type is the same as that of the CSI reporting MAC CE, but cannot be multiplexed with data whose data type is different from that of the CSI reporting MAC CE. In this way, while an existing MAC layer data multiplexing rule is satisfied, data transmission efficiency can be improved.

Optionally, the controlling transmission of channel state information CSI based on a data type of the CSI includes:
controlling transmission of the CSI based on a transmission priority of the CSI and the data type of the CSI.

In this embodiment, the sidelink data may include the SRB, the DRB, the CSI reporting MAC CE, and the like. The SRB may include upper layer signaling of PC5-S, PC5-RRC signaling, and the like. In the data, except a first piece of PC5-S signaling that is transmitted by broadcast and does not require a HARQ feedback, for example, transmitted on an SRB 0, the upper layer signaling of PC5-S and the PC5-RRC signaling have relatively high requirements on transmission reliability, and therefore a HARQ feedback is generally required. For the DRB, a priority of data on each logical channel and whether a HARQ feedback is required may be configured separately.

In addition, a priority of the SRB is higher than a priority of the CSI reporting MAC CE, and the priority of the CSI reporting MAC CE is higher than a priority of the DRB.

In an actual application, when the CSI reporting MAC CE is of the type that requires a HARQ feedback, the CSI reporting MAC CE may be multiplexed with most SRBs (for example, except the SRB 0, where it should be noted that data of the SRB 0 appears only in a first piece, and no data of the SRB 0 exists in subsequent data transmission). The CSI reporting MAC CE may alternatively be multiplexed with the DRB configured to require a HARQ feedback. When the CSI reporting MAC CE is of the type that requires no HARQ feedback, the MAC CE cannot be multiplexed with most SRBs (nor the SRB 0, because the SRB 0 is transmitted by broadcast), but can be multiplexed with DRBs that are configured not to require a HARQ feedback.

In this embodiment, after the data type of the CSI reporting MAC CE is determined, the CSI reporting MAC CE may be transmitted in a same transmission mode as the sidelink data such as the SRB and the DRB. In other words, the transmission is performed according to the principle of multiplexing data of a same type and not multiplexing data of different types, the priority principle, and the PBR principle. The following describes the transmission mode of the sidelink data in different cases after the data type of the CSI reporting MAC CE is determined.

Case 1: A resource type of an allocated or selected transmission resource may dynamically indicate whether to carry a HARQ feedback or not to carry a HARQ feedback. In this case, two data types of the transmission resource can be both supported, and it is sufficient to dynamically indicate whether a HARQ feedback is required. This is the most flexible mode of resource allocation and use.

In this case, data that has a highest priority and whose transmission token bucket is not full, meaning a PBR is not reached, may be first selected according to the priority principle and a token bucket principle. Generally, priorities of the SRB and the MAC CE are higher than that of other data, and there is no PBR limitation, that is, as long as there is a data packet, the data packet is transmitted preferentially.

In an actual application, if there is an SRB to be transmitted, because a priority of the SRB is the highest, the SRB is transmitted preferentially. Because the SRB is data requiring a HARQ feedback, the MAC PDU as a whole requires a HARQ feedback this time. If there is remaining space after the current transmission resource contains all the SRB data to be transmitted, the CSI reporting MAC CE having the next priority may be considered. If the CSI reporting MAC CE requires a HARQ feedback, the two data types are consistent, multiplexing can be performed, and the CSI reporting MAC CE is loaded into a remaining position of the MAC PDU first. If there is other space, another DRB that requires a HARQ feedback continues to be considered. If the CSI reporting MAC CE does not require a HARQ feedback, the two data types are inconsistent, multiplexing cannot be performed, and only the DRB data that requires a HARQ feedback can be loaded into the remaining position of the MAC PDU.

If data having a highest priority in a transmission buffer at a transmission time is the CSI reporting MAC CE (that is, there is no SRB), the data type of the MAC PDU transmitted this time may be determined by the data type of the CSI reporting MAC CE. If the CSI reporting MAC CE requires a HARQ feedback, the MAC PDU transmitted this time requires a HARQ feedback, and the DRB that requires a HARQ feedback may be loaded in the remaining position of the MAC PDU. If the CSI reporting MAC CE does not require a HARQ feedback, the MAC PDU transmitted this time does not require a HARQ feedback, and DRB data that requires no HARQ feedback may be loaded in the remaining position of the MAC PDU.

Case 2: A resource type of an allocated or selected transmission resource statically supports or does not support a HARQ feedback. In this case, the transmission resource can support only one data type. This mode has relatively high resource efficiency.

In this case, if the transmission resource supports a HARQ feedback, an SRB is selected preferentially, and then a CSI reporting MAC CE that requires a HARQ feedback is selected. If there is remaining space, a DRB configured to require a HARQ feedback is selected in a descending order of priorities, and PBR satisfaction is considered.

If the transmission resource does not support a HARQ feedback, a CSI reporting MAC CE that requires no HARQ feedback is considered first. If there is remaining space, a DRB configured not to require a HARQ feedback is selected in a descending order of priorities, and PBR satisfaction is considered.

If the data type supported by the current transmission resource for transmission is different from the data type of the CSI reporting MAC CE, the current transmission resource cannot be used to transmit the CSI reporting MAC CE, and transmission can be performed only when a transmission resource whose data type is supported for transmission is the same as the data type of the CSI reporting MAC CE is obtained next time.

Optionally, the controlling transmission of channel state information CSI based on a data type of the CSI includes:
controlling transmission of the CSI within a first time window based on the data type of the CSI, where
the first time window is a time window corresponding to trigger information received by the first device, and the trigger information is used to trigger reporting of the CSI.

In this embodiment, the first device may receive the trigger information from the second device, and report the CSI within the time window corresponding to the trigger information; otherwise, reporting of the CSI may be dropped this time.

The trigger information may include SCI carrying a CSI reporting indication. A start position of the time window may be a first symbol or a last symbol at a time of transmitting the SCI, or a transmission position of a reference signal corresponding to the SCI, or the like. A size of the time window may be an indicated or configured value.

For example, the size of the time window for CSI reporting may be configured or indicated as N milliseconds or N slots (that is, slots), where N is a positive integer. If the second device transmits a piece of SCI carrying a CSI reporting indication at a time t, the size of the time window may be [t, t+N], or considering a reception processing latency and a resource selection latency, the size of the time window is [t+4, t+4+N]. The first device needs to transmit the CSI reporting MAC CE within the time window; otherwise, the time window is invalid, and continued transmission is not required.

For another example, the size of the time window for CSI reporting may be configured or indicated as N milliseconds or N slots, and the second device transmits a piece of SCI carrying a CSI reporting indication at a time t, and transmits a measurement reference signal at a time t+3. In this case, the size of the time window may be [t+3, t+3+N]. The first device needs to transmit the CSI reporting MAC CE within the time window; otherwise, the time window is invalid, and continued transmission is not required.

In this embodiment, by controlling transmission of the CSI within the corresponding valid time window, a deviation of understanding CSI reporting between a transmitting device and a receiving device can be reduced, and consistency of understanding CSI reporting between the transmitting device and the receiving device can be ensured.

Optionally, time windows corresponding to CSI of different data types may be different.

For example, a time window corresponding to CSI requiring a HARQ feedback and a time window for CSI requiring no HARQ feedback may be different. The difference in time window may include at least one of differences in window position and window size of the time windows.

In an actual application, a time window corresponding to each data type may be configured for each piece of CSI to be reported. In this way, in a case that the data type of the CSI to be reported is the type that requires a HARQ feedback, transmission of the CSI within the time window corresponding to the type that requires a HARQ feedback can be controlled. In a case that the data type of the CSI to be reported is the type that requires no HARQ feedback, transmission of the CSI within the time window corresponding to the type that requires no HARQ feedback can be controlled. This can ensure reliability of the CSI transmission while saving resources.

Optionally, the method may further include:
in a case that the CSI is not transmitted within the first time window, dropping transmission of the CSI, or deleting the CSI.

For example, if the CSI is not transmitted within the first time window, transmission of the CSI may be dropped, initial HARQ transmission may be canceled, or HARQ retransmission may be stopped. Further, for HARQ retransmission, the CSI reporting MAC CE may be deleted from the MAC PDU, and the MAC PDU is repacketized for transmission or retransmission; or all data of the MAC PDU may be directly deleted.

Optionally, the CSI carries first indication information, and the first indication information is used to indicate trigger information corresponding to the CSI.

In this embodiment, the first indication information may be carried in the reported CSI to indicate the trigger information corresponding to the reported CSI. In this way, in a case that parallel processing of at least two CSI triggers and reports is allowed, consistency of understanding CSI reporting between the transmitting device and the receiving device can be ensured.

Optionally, the first indication information is a first trigger identifier, and the first trigger identifier is the same as a trigger identifier carried in first trigger information; or
the first indication information is feature information determined based on first trigger information; or
in a case that first trigger information carries a type identifier for indicating a reporting type of the CSI, the first indication information is reporting type information of the CSI, where
the first trigger information is trigger information used to trigger reporting of the CSI.

In an implementation, a trigger identifier may be carried in the trigger information for triggering CSI reporting; and trigger identifiers carried in different trigger information may be different. Because the reported CSI carries a trigger identifier same as the trigger identifier in the trigger information of the CSI, consistency of understanding CSI reporting between the transmitting device and the receiving device can be ensured.

For example, a trigger identifier (that is, an ID) of a first CSI reporting trigger (corresponding to trigger information a1) is 0, a trigger ID of a second CSI reporting trigger (corresponding to trigger information a2) is 1, and so on. A length of the foregoing trigger ID may be properly determined based on an actual requirement, for example, 1 bit or 2 bits, provided that the length can cover a maximum quantity of possible parallel CSI reporting triggers. The trigger ID can be reused.

In another implementation, some feature information may be extracted based on the trigger information for triggering CSI reporting, and the feature information may be carried in the reported CSI. Therefore, consistency of understanding CSI reporting between the transmitting device and the receiving device can be ensured.

Optionally, the feature information may include transmission position information of the trigger information, or transmission position information of a reference signal corresponding to the trigger information. The position information may include time-frequency position information.

For example, a value range of a slot is 0 to 9; slot information is carried in a CSI report; a slot of a transmission position of a reference signal that triggers or corresponds to a first CSI report is 2; and a slot of a transmission position of a reference signal that triggers or corresponds to a second CSI report is 7. Therefore, it can be easy to distinguish for which trigger or which reference signal measurement result each CSI report is intended.

In another implementation, the type identifier for indicating the reporting type of the CSI may be carried in the trigger information for triggering CSI reporting. In this way, the trigger information corresponding to the CSI reporting may be indicated based on the reporting type information of the CSI, to ensure consistency of understanding CSI reporting between the transmitting device and the receiving device.

The reporting type of the CSI may include but is not limited to CQI reporting, RI reporting, CQI-RI reporting, and the like. The type identifier may be configured by the network-side device. For example, the type identifier is configured by using RRC signaling. An ID of type-1 CSI reporting is 1, an ID of type-2 CSI reporting is 2, and so on. The reporting type information of the CSI may include reporting format information of the CSI or the foregoing type identifier.

It should be noted that, in a case that the reporting type information of the CSI includes the reporting format information of the CSI, to ensure consistency of understanding CSI reporting between the transmitting device and the receiving device, when CSI reporting is triggered, only superposition of triggering CSI reporting of different reporting formats may be allowed. In this way, reporting of different CSI can be distinguished based on the reporting format information of the CSI. In a case that the reporting type information of the CSI includes the type identifier, triggering CSI reporting of any reporting format may be superposed, because reporting of different CSI can be distinguished based on the type identifier carried in the CSI.

An embodiment of the present invention further provides a CSI transmission method. The method is applied to a first device. FIG. 3 is a flowchart of another CSI transmission method according to an embodiment of the present invention. As shown in FIG. 3, the method includes the following steps.

Step 301: Receive first trigger information from a second device.

Step 302: Transmit channel state information CSI in response to the first trigger information, where the CSI carries first indication information, and the first indication information is used to indicate trigger information corresponding to the CSI.

In this embodiment, the first indication information may be carried in the reported CSI to indicate the trigger information corresponding to the reported CSI. In this way, in a case that parallel processing of at least two CSI triggers and reports is allowed, consistency of understanding CSI reporting between a transmitting device and a receiving device can be ensured.

Optionally, the first indication information is a first trigger identifier, and the first trigger identifier is the same as a trigger identifier carried in the first trigger information; or
the first indication information is feature information determined based on the first trigger information; or
in a case that the first trigger information carries a type identifier for indicating a reporting type of the CSI, the first indication information is reporting type information of the CSI.

In an implementation, the second device may add a trigger identifier to the trigger information for triggering CSI reporting; and trigger identifiers carried in different trigger information may be different. Because the first device adds a trigger identifier same as the trigger identifier in the trigger information of the CSI to the reported CSI, consistency of understanding CSI reporting between the transmitting device and the receiving device can be ensured.

In another implementation, the first device may extract some feature information based on the trigger information for triggering CSI reporting, and the feature information may be carried in the reported CSI. Therefore, consistency of understanding CSI reporting between the transmitting device and the receiving device can be ensured.

Optionally, the feature information may include transmission position information of the trigger information, or transmission position information of a reference signal corresponding to the trigger information. The position information may include time-frequency position information.

In another implementation, the second device may add the type identifier for indicating the reporting type of the CSI to the trigger information for triggering CSI reporting. In this way, the first device can indicate, based on the reporting type information of the CSI, the trigger information corresponding to the CSI reporting, to ensure consistency of understanding CSI reporting between the transmitting device and the receiving device.

The reporting type of the CSI may include but is not limited to CQI reporting, RI reporting, CQI-RI reporting, and the like. The type identifier may be configured by a network-side device. For example, the type identifier is configured by using RRC signaling. An ID of type-1 CSI reporting is 1, and an ID of type-2 CSI reporting is 2. The reporting type information of the CSI may include reporting format information of the CSI or the foregoing type identifier.

It should be noted that, in a case that the reporting type information of the CSI includes the reporting format information of the CSI, to ensure consistency of understanding CSI reporting between the transmitting device and the receiving device, when CSI reporting is triggered, only superposition of triggering CSI reporting of different reporting formats may be allowed. In this way, reporting of different CSI can be distinguished based on the reporting format information of the CSI. In a case that the reporting type information of the CSI includes the type identifier, triggering CSI reporting of any reporting format may be superposed, because reporting of different CSI can be distinguished based on the type identifier carried in the CSI.

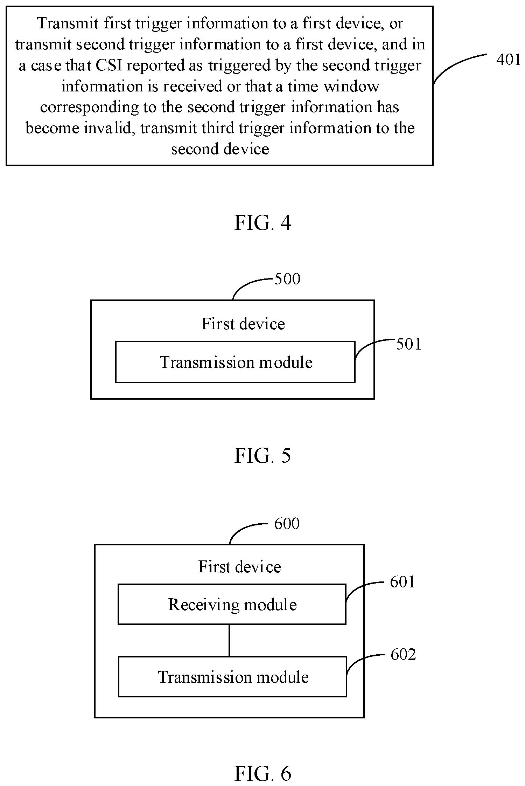

An embodiment of the present invention further provides a method for triggering CSI transmission. The method is applied to a second device. FIG. 4 is a flowchart of a method for triggering CSI transmission according to an embodiment of the present invention. As shown in FIG. 4, the method includes the following step.

Step 401: Transmit first trigger information to a first device, or transmit second trigger information to a first device, and in a case that CSI reported as triggered by the second trigger information is received or a time window corresponding to the second trigger information has become invalid, transmit third trigger information to the second device.

The first trigger information carries a trigger identifier or carries a type identifier used to indicate a reporting type of channel state information CSI, and the first trigger information is used to trigger reporting of the CSI; and the second trigger information and the third trigger information are used to trigger reporting of different CSI.

In an implementation, the second device may add the trigger identifier or the type identifier for indicating the reporting type of the CSI to the first trigger information for triggering CSI reporting. In this way, the first device can add the trigger identifier to the reported CSI or use the reporting type information of the CSI to distinguish reporting of different CSI. Therefore, consistency of understanding CSI reporting between a transmitting device and a receiving device in a case of parallel triggering of CSI reporting can be ensured.

The trigger identifier may be used to distinguish different CSI reporting triggers. For example, a trigger identifier (that is, an ID) of a first CSI reporting trigger (corresponding to trigger information a1) is 0, a trigger ID of a second CSI reporting trigger (corresponding to trigger information a2) is 1, and so on.

The CSI reporting type may include but is not limited to CQI reporting, RI reporting, CQI-RI reporting, and the like. The type identifier may be configured by a network-side device. For example, the type identifier is configured by using RRC signaling. An ID of type-1 CSI reporting is 1, an ID of type-2 CSI reporting is 2, and so on. The reporting type information of the CSI may include reporting format information of the CSI or the foregoing type identifier.

It should be noted that, in a case that the reporting type information of the CSI includes the reporting format information of the CSI, to ensure consistency of understanding CSI reporting between the transmitting device and the receiving device, when CSI reporting is triggered, the second device may allow only superposition of triggering CSI reporting of different reporting formats. In this way, reporting of different CSI can be distinguished based on the reporting format information of the CSI. In a case that the reporting type information of the CSI includes the type identifier, the second device may superpose triggering CSI reporting of any reporting format, and reporting of different CSI can be distinguished based on the type identifier carried in the CSI.

In another implementation, the second device may not trigger another different CSI report before one CSI report is completed, to avoid confusion of CSI reporting and ensure consistency of understanding CSI reporting between the transmitting device and the receiving device.

In an actual application, if the second device triggers two CSI reports within two relatively close time ranges, and the CSI report content or measurement content is different, if time windows of the two CSI reports overlap, after receiving a CSI report, the second device does not know for which trigger result the CSI report content is intended. Consequently, the report content is inaccurate, and there is adverse impact on subsequent scheduled transmission. To avoid the problem, the second device may trigger a next CSI report after a time window corresponding to the current CSI reporting trigger is invalid or in a case that a CSI reporting MAC CE corresponding to the CSI reporting trigger has been received.

It should be noted that the CSI reporting MAC CE can be transmitted only in a case of receiving trigger information (such as SCI) transmitted by the second device and indicating CSI reporting. In addition, the CSI reporting MAC CE is transmitted only once, and there is no active MAC layer retransmission (except HARQ retransmission).

FIG. 5 is a structural diagram of a first device according to an embodiment of the present invention. As shown in FIG. 5, the first device 500 includes:
a transmission module 501, configured to control transmission of channel state information CSI based on a data type of the CSI, where
the data type includes a type that requires a hybrid automatic repeat request HARQ feedback or a type that requires no HARQ feedback.

Optionally, the data type of the CSI is configured or predefined by a protocol.

Optionally, the data type of the CSI is determined based on at least one of the following:
a resource type of a first transmission resource, where the first transmission resource is a resource used to transmit sidelink data to be transmitted, and the resource type is used to indicate a data type whose transmission is supported by the first transmission resource;
a data type of first data, where the first data includes part or all of data other than the CSI in the sidelink data to be transmitted; and
a transmission requirement of the CSI.

Optionally, the first data includes data having a higher priority than the CSI in the sidelink data to be transmitted.

Optionally, in a case that the data type of the CSI is determined based on the resource type of the first transmission resource, the data type of the CSI is the same as the data type whose transmission is supported by the first transmission resource.

Optionally, in a case that the data type of the CSI is determined based on the data type of the first data, the data type of the CSI is the same as the data type of the first data.

Optionally, in a case that a second transmission resource supports transmission of data requiring a HARQ feedback and data requiring no HARQ feedback, the data type of the CSI is configured or predefined by a protocol; or
in a case that there is no data having a higher priority than the CSI in sidelink data to be transmitted, the data type of the CSI is configured or predefined by a protocol; or
in a case that a second transmission resource supports transmission of data requiring a HARQ feedback and data requiring no HARQ feedback, and that there is no data having a higher priority than the CSI in sidelink data to be transmitted, the data type of the CSI is configured or predefined by a protocol, where
the second transmission resource is a resource used to transmit the sidelink data to be transmitted.

Optionally, in a case that a third transmission resource supports transmission of data requiring a HARQ feedback and data requiring no HARQ feedback, and that there is no data having a higher priority than the CSI in sidelink data to be transmitted, the data type of the CSI is determined based on at least one of the following:
a data type of second data, where the second data is data having a highest priority in data other than the CSI in the sidelink data to be transmitted; and
a transmission requirement of the CSI, where
the third transmission resource is a resource used to transmit the sidelink data to be transmitted.

Optionally, the transmission requirement of the CSI is configured or predefined by a protocol.

Optionally, the transmission module is specifically configured to:
control multiplex transmission of the CSI and third data, where
the third data is data of the same data type as the CSI in sidelink data to be transmitted.

Optionally, the transmission module is specifically configured to:
control transmission of the CSI within a first time window based on the data type of the CSI, where
the first time window is a time window corresponding to trigger information received by the first device, and the trigger information is used to trigger reporting of the CSI.

Optionally, time windows corresponding to CSI of different data types are different.

Optionally, the first device further includes:
an abandonment module, configured to abandon transmission of the CSI or delete the CSI in a case that the CSI is not transmitted within the first time window.

Optionally, the CSI carries first indication information, and the first indication information is used to indicate trigger information corresponding to the CSI.

Optionally, the first indication information is a first trigger identifier, and the first trigger identifier is the same as a trigger identifier carried in first trigger information; or
the first indication information is feature information determined based on the first trigger information; or
in a case that first trigger information carries a type identifier for indicating a reporting type of the CSI, the first indication information is reporting type information of the CSI, where
the first trigger information is trigger information used to trigger reporting of the CSI.

Optionally, the feature information comprises transmission position information of the trigger information, or transmission position information of a reference signal corresponding to the trigger information.

The first device 500 provided in this embodiment of the present invention is capable of implementing each process implemented by the first device in the foregoing method embodiment. To avoid repetition, details are not described herein again.

In the first device 500 in this embodiment of the present invention, the transmission module 501 is configured to control transmission of the CSI based on the data type of the CSI, where the data type includes the type that requires a HARQ feedback and the type that requires no HARQ feedback. Therefore, a CSI transmission mode that can be used for sidelink is provided, so that performance of CSI transmission on sidelink can be improved.

FIG. 6 is a structural diagram of another first device according to an embodiment of the present invention. As shown in FIG. 6, the first device 600 includes:
a receiving module 601, configured to receive first trigger information from a second device; and
a transmission module 602, configured to transmit channel state information CSI in response to the first trigger information, where
the CSI carries first indication information, and the first indication information is used to indicate trigger information corresponding to the CSI.

Optionally, the first indication information is a first trigger identifier, and the first trigger identifier is the same as a trigger identifier carried in the first trigger information; or
the first indication information is feature information determined based on the first trigger information; or
in a case that the first trigger information carries a type identifier for indicating a reporting type of the CSI, the first indication information is reporting type information of the CSI.

Optionally, the feature information comprises transmission position information of the trigger information, or transmission position information of a reference signal corresponding to the trigger information.

The first device 600 provided in this embodiment of the present invention is capable of implementing each process implemented by the first device in the foregoing method embodiment. To avoid repetition, details are not described herein again.

In the first device 600 in this embodiment of the present invention, the receiving module 601 is configured to receive the first trigger information from the second device; and the transmission module 602 is configured to transmit the channel state information CSI in response to the first trigger information, where the CSI carries the first indication information, and the first indication information is used to indicate the trigger information corresponding to the CSI. The first indication information is carried in the reported CSI to indicate the trigger information corresponding to the reported CSI. In this way, in a case that parallel processing of at least two CSI triggers and reports is allowed, consistency of understanding CSI reporting between a transmitting device and a receiving device can be ensured.

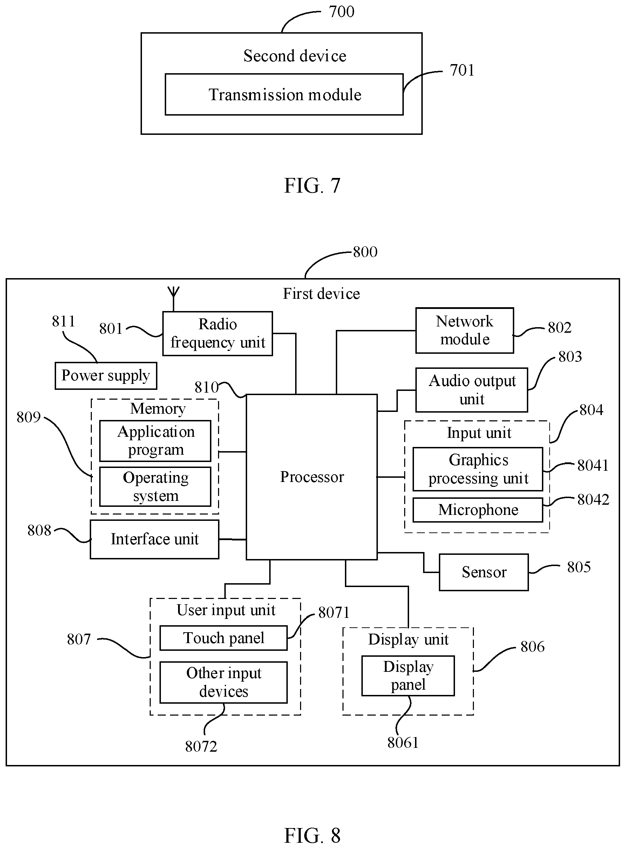

FIG. 7 is a structural diagram of a second device according to an embodiment of the present invention. As shown in FIG. 7, the second device 700 includes:
a transmission module 701, configured to: transmit first trigger information to a first device, where the first trigger information carries a trigger identifier or carries a type identifier used to indicate a reporting type of channel state information CSI, and the first trigger information is used to trigger reporting of the CSI; or transmit second trigger information to a first device, and in a case that CSI reported as triggered by the second trigger information is received or a time window corresponding to the second trigger information has become invalid, transmit third trigger information to the second device, where the second trigger information and the third trigger information are used to trigger reporting of different CSI.

The second device 700 provided in this embodiment of the present invention is capable of implementing each process implemented by the second device in the foregoing method embodiment. To avoid repetition, details are not described herein again.

In the second device 700 in this embodiment of the present invention, the transmission module 701 is configured to: transmit the first trigger information to the first device, or transmit the second trigger information to the first device, and in the case in which the CSI reported as triggered by the second trigger information is received or the time window corresponding to the second trigger information has become invalid, transmit the third trigger information to the second device. Therefore, consistency of understanding CSI reporting between a transmitting device and a receiving device can be ensured.

FIG. 8 is a structural diagram of another first device according to an embodiment of the present invention. Referring to FIG. 8, the first device 800 includes but is not limited to components such as a radio frequency unit 801, a network module 802, an audio output unit 803, an input unit 804, a sensor 805, a display unit 806, a user input unit 807, an interface unit 808, a memory 809, a processor 810, and a power supply 811. A person skilled in the art can understand that the structure of the first device shown in FIG. 8 does not constitute any limitation on the first device. The first device may include more or fewer components than those shown in the figure, or a combination of some components, or the components disposed differently. In this embodiment of the present invention, the first device includes but is not limited to a mobile phone, a tablet computer, a notebook computer, a palmtop computer, a vehiclemounted terminal, a wearable device, a pedometer, or the like.

The radio frequency unit 801 is configured to control transmission of channel state information CSI based on a data type of the CSI, where the data type includes a type that requires a hybrid automatic repeat request HARQ feedback or a type that requires no HARQ feedback.

It should be understood that, in this embodiment of the present invention, the radio frequency unit 801 and the processor 810 are capable of implementing each process implemented by the first device in the foregoing method embodiment. To avoid repetition, details are not described herein again.

It should be understood that in this embodiment of the present invention, the radio frequency unit 801 may be configured to receive and transmit signals in an information reception or transmission or call process. Specifically, after receiving downlink data from a base station, the radio frequency unit 801 transmits the downlink data to the processor 810 for processing, and in addition, transmits uplink data to the base station. Generally, the radio frequency unit 801 includes but is not limited to an antenna, at least one amplifier, a transceiver, a coupler, a low noise amplifier, a duplexer, and the like. In addition, the radio frequency unit 801 may also communicate with a network and other devices via a wireless communications system.

The first device provides a user with wireless broadband internet access through the network module 802, for example, helping the user transmit and receive e-mails, browse web pages, and access streaming media.

The audio output unit 803 may convert audio data received by the radio frequency unit 801 or the network module 802 or stored in the memory 809 into an audio signal and output the audio signal as a sound. Furthermore, the audio output unit 803 may also provide an audio output (for example, a call signal received sound or a message received sound) related to a specific function performed by the first device 800. The audio output unit 803 includes a speaker, a buzzer, a receiver, and the like.

The input unit 804 is configured to receive an audio or video signal. The input unit 804 may include a graphics processing unit (Graphics Processing Unit, GPU) 8041 and a microphone 8042. The graphics processing unit 8041 processes image data of a still picture or video obtained by an image capture apparatus (such as a camera) in a video capture mode or an image capture mode. A processed image frame may be displayed on the display unit 806. The image frame processed by the graphics processing unit 8041 may be stored in the memory 809 (or another storage medium) or be transmitted by the radio frequency unit 801 or the network module 802. The microphone 8042 is capable of receiving sounds and processing such sounds into audio data. The processed audio data can be converted into a format output that can be transmitted to a mobile communication base station through the radio frequency unit 801 in a telephone call mode.

The first device 800 further includes at least one sensor 805, for example, an optical sensor, a motion sensor, and other sensors. Specifically, the optical sensor includes an ambient light sensor and a proximity sensor. The ambient light sensor may adjust luminance of the display panel 8061 based on brightness of ambient light, and the proximity sensor may turn off the display panel 8061 and/or backlight when the first device 800 moves close to an ear. As a type of motion sensor, an accelerometer sensor can detect magnitudes of accelerations in all directions (usually three axes), can detect a magnitude and a direction of gravity when the first device is in a static state, and can be applied to posture recognition (such as screen switching between portrait and landscape, related games, and magnetometer posture calibration) of the first device, functions related to vibration recognition (such as pedometer and tapping), and the like. The sensor 805 may also include a fingerprint sensor, a pressure sensor, an iris sensor, a molecular sensor, a gyroscope, a barometer, a hygrometer, a thermometer, an infrared sensor, and the like. Details are not described herein.

The display unit 806 is configured to display information input by the user or information provided to the user. The display unit 806 may include a display panel 8061, and the display panel 8061 may be configured in a form of a liquid crystal display (Liquid Crystal Display, LCD), an organic light-emitting diode (Organic Light-Emitting Diode, OLED), or the like.

The user input unit 807 may be configured to receive input digit or character information and generate key signal input related to user setting and function control of the first device. Specifically, the user input unit 807 includes a touch panel 8071 and other input devices 8072. The touch panel 8071 is also referred to as a touchscreen and can collect a touch operation (such as an operation performed by the user on the touch panel 8071 or near the touch panel 8071 with a finger or by using any proper object or accessory such as a stylus) of the user on or near the touch panel 8071. The touch panel 8071 may include two parts: a touch detection apparatus and a touch controller. The touch detection apparatus detects a touch azimuth of a user, detects a signal brought by a touch operation, and transmits the signal to the touch controller. The touch controller receives touch information from the touch detection apparatus, converts the touch information into touchpoint coordinates, and transmits the touchpoint coordinates to the processor 810, and receives a command transmitted by the processor 810 and executes the command. In addition, the touch panel 8071 may be implemented in a plurality of forms, for example, a resistive, capacitive, infrared, or surface acoustic wave touch panel. The user input unit 807 may further include the other input devices 8072 in addition to the touch panel 8071. Specifically, the other input devices 8072 may include but are not limited to a physical keyboard, a function key (such as a volume control key or a switch key), a trackball, a mouse, and a joystick. Details are not described herein.

Further, the touch panel 8071 may cover the display panel 8061. When detecting a touch operation on or near the touch panel 8071, the touch panel 8071 transmits the touch operation to the processor 810 to determine a type of a touch event. Then, the processor 810 provides a corresponding visual output on the display panel 8061 based on the type of the touch event. Although in FIG. 8, the touch panel 8071 and the display panel 8061 act as two independent parts to implement input and output functions of the first device, in some embodiments, the touch panel 8071 and the display panel 8061 may be integrated to implement the input and output functions of the first device. This is not specifically limited herein.

The interface unit 808 is an interface between an external apparatus and the first device 800. For example, the external apparatus may include a wired or wireless headphone port, an external power (or battery charger) port, a wired or wireless data port, a memory card port, a port for connecting an apparatus having an identification module, an audio input/output (Input/Output, I/O) port, a video I/O port, an earphone port, and the like. The interface unit 808 may be configured to: receive an input (for example, data information and power) from the external apparatus, and transmit the received input to one or more elements in the first device 800, or may be configured to transmit data between the first device 800 and the external apparatus.

The memory 809 may be configured to store software programs and various data. The memory 809 may primarily include a program storage area and a data storage area. The program storage area may store an operating system, an application (such as an audio play function and an image play function) required by at least one function, and the like. The data storage area may store data (such as audio data and a phone book) created based on use of the mobile phone. In addition, the memory 809 may include a high-speed random access memory, and may further include a non-volatile memory such as a disk storage device, a flash memory device, or another volatile solid-state storage device.

The processor 810 is a control center of the first device, uses various interfaces and lines to connect parts of the entire first device, and executes various functions and processing data of the first device by running or executing software programs and/or modules stored in the memory 809 and invoking data stored in the memory 809, so as to perform overall monitoring on the first device. The processor 810 may include one or more processing units. Preferably, the processor 810 may integrate an application processor and a modem processor. The application processor mainly processes the operating system, a user interface, an application program, and the like. The modem processor mainly processes wireless communication. It can be understood that the modem processor may alternatively be not integrated in the processor 810.

The first device 800 may further include the power supply 811 (such as a battery) for supplying power to the components. Preferably, the power supply 811 may be logically connected to the processor 810 through a power management system. In this way, functions such as charge management, discharge management, and power consumption management are implemented by using the power management system.

In addition, the first device 800 includes some functional modules that are not shown. Details are not described herein.

Preferably, an embodiment of the present invention further provides a first device, including a processor 810, a memory 809, and a computer program stored in the memory 809 and capable of running on the processor 810. When the computer program is executed by the processor 810, each process of the foregoing embodiment of the CSI transmission method is implemented, with the same technical effect achieved. To avoid repetition, details are not described herein again.

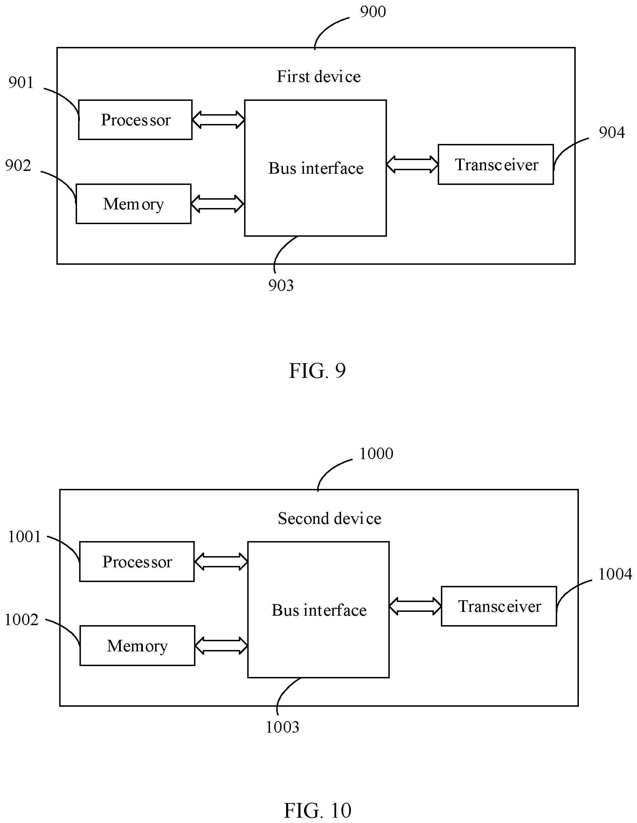

FIG. 9 is a structural diagram of another first device according to an embodiment of the present invention. As shown in FIG. 9, the first device 900 includes a processor 901, a memory 902, a bus interface 903, and a transceiver 904, where the processor 901, the memory 902, and the transceiver 904 are all connected to the bus interface 903.

In this embodiment of the present invention, the first device 900 further includes: a computer program stored in the memory 902 and capable of running on the processor 901.

In this embodiment of the present invention, the transceiver 904 is configured to:
receive first trigger information from a second device; and
transmit channel state information CSI in response to the first trigger information, where the CSI carries first indication information, and the first indication information is used to indicate trigger information corresponding to the CSI.

It should be understood that, in this embodiment of the present invention, the processor 901 and the transceiver 904 are capable of implementing each process implemented by the first device in the foregoing method embodiment. To avoid repetition, details are not described herein again.

FIG. 10 is a structural diagram of another second device according to an embodiment of the present invention. As shown in FIG. 10, the second device 1000 includes a processor 1001, a memory 1002, a bus interface 1003, and a transceiver 1004, where the processor 1001, the memory 1002, and the transceiver 1004 are all connected to the bus interface 1003.

In this embodiment of the present invention, the second device 1000 further includes: a computer program stored in the memory 1002 and capable of running on the processor 1001.

In this embodiment of the present invention, the transceiver 1004 is configured to:
transmit first trigger information to a first device, where the first trigger information carries a trigger identifier or carries a type identifier used to indicate a reporting type of channel state information CSI, and the first trigger information is used to trigger reporting of the CSI; or
transmit second trigger information to a first device, and in a case that CSI reported as triggered by the second trigger information is received or a time window corresponding to the second trigger information has become invalid, transmit third trigger information to the second device, where the second trigger information and the third trigger information are used to trigger reporting of different CSI.

An embodiment of the present invention further provides a computer-readable storage medium. The computer-readable storage medium stores a computer program. When the computer program is executed by a processor, each process of the foregoing embodiment of the CSI transmission method is implemented, or each process of the foregoing embodiment of the method for triggering CSI transmission is implemented, with the same technical effect achieved. To avoid repetition, details are not described herein again. The computer-readable storage medium is, for example, a read-only memory (Read-Only Memory, ROM), a random access memory (Random Access Memory, RAM), a magnetic disk, or an optical disc.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of the present invention essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of the present invention.

The embodiments of the present invention are described above with reference to the accompanying drawings, but the present invention is not limited to the embodiments. The embodiments are only illustrative rather than restrictive. Inspired by the present invention, a person of ordinary skill in the art can still derive a plurality of variations without departing from the essence of the present invention and the protection scope of the claims. All these variations shall fall within the protection of the present invention.

## Claims

1. A CSI transmission method, applied to a first device and comprising:
controlling transmission of channel state information CSI based on a data type of the CSI, wherein
the data type comprises a type that requires a hybrid automatic repeat request HARQ feedback or a type that requires no HARQ feedback.

2. The method according to claim 1, wherein the data type of the CSI is configured or predefined by a protocol.

3. The method according to claim 1, wherein the data type of the CSI is determined based on at least one of the following:
a resource type of a first transmission resource, wherein the first transmission resource is a resource used to transmit sidelink data to be transmitted, and the resource type is used to indicate a data type whose transmission is supported by the first transmission resource;
a data type of first data, wherein the first data comprises part or all of data other than the CSI in the sidelink data to be transmitted; and
a transmission requirement of the CSI.

4. The method according to claim 3, wherein the first data comprises data having a higher priority than the CSI in the sidelink data to be transmitted.

5. The method according to claim 3, wherein in a case that the data type of the CSI is determined based on the resource type of the first transmission resource, the data type of the CSI is the same as the data type whose transmission is supported by the first transmission resource.

6. The method according to claim 3, wherein in a case that the data type of the CSI is determined based on the data type of the first data, the data type of the CSI is the same as the data type of the first data.

7. The method according to claim 1, wherein in a case that a second transmission resource supports transmission of data requiring a HARQ feedback and data requiring no HARQ feedback, the data type of the CSI is configured or predefined by a protocol; or
in a case that there is no data having a higher priority than the CSI in sidelink data to be transmitted, the data type of the CSI is configured or predefined by a protocol; or
in a case that a second transmission resource supports transmission of data requiring a HARQ feedback and data requiring no HARQ feedback, and that there is no data having a higher priority than the CSI in sidelink data to be transmitted, the data type of the CSI is configured or predefined by a protocol, wherein
the second transmission resource is a resource used to transmit the sidelink data to be transmitted.

8. The method according to claim 1, wherein in a case that a third transmission resource supports transmission of data requiring a HARQ feedback and data requiring no HARQ feedback, and that there is no data having a higher priority than the CSI in sidelink data to be transmitted, the data type of the CSI is determined based on at least one of the following:
a data type of second data, wherein the second data is data having a highest priority in data other than the CSI in the sidelink data to be transmitted; and
a transmission requirement of the CSI, wherein
the third transmission resource is a resource used to transmit the sidelink data to be transmitted.

9. The method according to claim 3 or 8, wherein the transmission requirement of the CSI is configured or predefined by a protocol.

10. The method according to claim 1, wherein the controlling transmission of channel state information CSI based on a data type of the CSI comprises:
controlling multiplex transmission of the CSI and third data, wherein
the third data is data of the same data type as the CSI in sidelink data to be transmitted.

11. The method according to claim 1, wherein the controlling transmission of channel state information CSI based on a data type of the CSI comprises:
controlling transmission of the CSI within a first time window based on the data type of the CSI, wherein
the first time window is a time window corresponding to trigger information received by the first device, and the trigger information is used to trigger reporting of the CSI.

12. The method according to claim 11, wherein time windows corresponding to CSI of different data types are different.

13. The method according to claim 11, further comprising:
in a case that the CSI is not transmitted within the first time window, dropping transmission of the CSI, or deleting the CSI.

14. The method according to claim 1, wherein the CSI carries first indication information, and the first indication information is used to indicate trigger information corresponding to the CSI.

15. The method according to claim 14, wherein the first indication information is a first trigger identifier, and the first trigger identifier is the same as a trigger identifier carried in first trigger information; or
the first indication information is feature information determined based on first trigger information; or
in a case that first trigger information carries a type identifier for indicating a reporting type of the CSI, the first indication information is reporting type information of the CSI, wherein
the first trigger information is trigger information used to trigger reporting of the CSI.

16. The method according to claim 15, wherein the feature information comprises transmission position information of the trigger information, or transmission position information of a reference signal corresponding to the trigger information.

17. A CSI transmission method, applied to a first device and comprising:
receiving first trigger information from a second device; and
transmitting channel state information CSI in response to the first trigger information, wherein
the CSI carries first indication information, and the first indication information is used to indicate trigger information corresponding to the CSI.

18. The method according to claim 17, wherein the first indication information is a first trigger identifier, and the first trigger identifier is the same as a trigger identifier carried in the first trigger information; or
the first indication information is feature information determined based on the first trigger information; or
in a case that the first trigger information carries a type identifier for indicating a reporting type of the CSI, the first indication information is reporting type information of the CSI.

19. The method according to claim 18, wherein the feature information comprises transmission position information of the trigger information, or transmission position information of a reference signal corresponding to the trigger information.

20. A method for triggering CSI transmission, applied to a second device and comprising:
transmitting first trigger information to a first device, wherein the first trigger information carries a trigger identifier or carries a type identifier used to indicate a reporting type of channel state information CSI, and the first trigger information is used to trigger reporting of the CSI; or
transmitting second trigger information to a first device, and in a case that CSI reported as triggered by the second trigger information is received or a time window corresponding to the second trigger information has become invalid, transmitting third trigger information to the second device, wherein the second trigger information and the third trigger information are used to trigger reporting of different CSI.

21. A first device, comprising:
a transmission module, configured to control transmission of channel state information CSI based on a data type of the CSI, wherein
the data type comprises a type that requires a hybrid automatic repeat request HARQ feedback or a type that requires no HARQ feedback.

22. The first device according to claim 21, wherein the data type of the CSI is configured or predefined by a protocol.

23. The first device according to claim 21, wherein the data type of the CSI is determined based on at least one of the following:
a resource type of a first transmission resource, wherein the first transmission resource is a resource used to transmit sidelink data to be transmitted, and the resource type is used to indicate a data type whose transmission is supported by the first transmission resource;
a data type of first data, wherein the first data comprises part or all of data other than the CSI in the sidelink data to be transmitted; and
a transmission requirement of the CSI.

24. The first device according to claim 23, wherein in a case that the data type of the CSI is determined based on the data type of the first data, the data type of the CSI is the same as the data type of the first data.

25. A first device, comprising:
a receiving module, configured to receive first trigger information from a second device; and
a transmission module, configured to transmit channel state information CSI in response to the first trigger information, wherein
the CSI carries first indication information, and the first indication information is used to indicate trigger information corresponding to the CSI.

26. A second device, comprising:
a transmission module, configured to: transmit first trigger information to a first device, wherein the first trigger information carries a trigger identifier or carries a type identifier used to indicate a reporting type of channel state information CSI, and the first trigger information is used to trigger reporting of the CSI; or transmit second trigger information to a first device, and in a case that CSI reported as triggered by the second trigger information is received or a time window corresponding to the second trigger information has become invalid, transmit third trigger information to the second device, wherein the second trigger information and the third trigger information are used to trigger reporting of different CSI.

27. A first device, comprising a processor, a memory, and a computer program stored in the memory and capable of running on the processor, wherein when the computer program is executed by the processor, the steps of the CSI transmission method according to any one of claims 1 to 16 are implemented, or the steps of the CSI transmission method according to any one of claims 17 to 19 are implemented.

28. A second device, comprising a processor, a memory, and a computer program stored in the memory and capable of running on the processor, wherein when the computer program is executed by the processor, the steps of the method for triggering CSI transmission according to claim 20 are implemented.

29. A computer-readable storage medium, wherein the computer-readable storage medium stores a computer program, and when the computer program is executed by a processor, the steps of the CSI transmission method according to any one of claims 1 to 16 are implemented, or steps of the CSI transmission method according to any one of claims 17 to 19 are implemented, or the steps of the method for triggering CSI transmission according to claim 20 are implemented.
